Europäisches Patentamt

European Patent Office

Office européen des brevets

(11) Veröffentlichungsnummer: **0 132 683**

**A2**

(12) **EUROPÄISCHE PATENTANMELDUNG**

(21) Anmeldenummer: **84108030.2**

(22) Anmeldetag: **09.07.84**

(51) Int. Cl.⁴: **G 05 D 23/275**

(30) Priorität: **22.07.83 DE 3326379**

(43) Veröffentlichungstag der Anmeldung:
**13.02.85 Patentblatt 85/7**

(84) Benannte Vertragsstaaten:
**AT BE CH DE FR LI**

(71) Anmelder: **KKW Kulmbacher Klimageräte-Werk GmbH
Am Goldenen Feld 18
D-8650 Kulmbach(DE)**

(72) Erfinder: **Kaim, Leo
Wolfersdorfer Strasse 4
D-8647 Stockheim(DE)**

(74) Vertreter: **Mehl, Ernst, Dipl.-Ing. et al,
Postfach 22 01 76
D-8000 München 22(DE)**

(54) **Regelungseinrichtung für Elektro-Wärmespeicherheizgeräte.**

(57) Eine Regeleinrichtung für Elektro- Wärmespeicherheizgeräte weist einen von einem Heizwiderstand beeinflußbaren hydraulischen Steuerfühler, eine mit jedem der Fühler durch ein Kapillarrohr verbundenen Kupplung, eine mit der Kupplung durch ein Kappillarrohr verbundene Membrandose und einen von der Membrandose beaufschlagbaren Schaltkontakt auf. Zum Schutz der Membrandose (8) ist die Volumenausdehnung der Membrandose (8) größer als die innerhalb der Anwendungsgrenztemperatur maximal mögliche Ausdehnung des in den Fühlern (1, 2) den Kapillarrohren (4, 5, 7) und der Kupplung (6) eingespannten Hydraulikmediums.

EP 0 132 683 A2

KKW Kulmbacher Klimageräte-        Unser Zeichen
Werk GmbH        VPA 83 P 6603 E

Regeleinrichtung für Elektro-Wärmespeicherheizgeräte

Die Erfindung bezieht sich auf eine Regeleinrichtung für Wärmespeicherheizgeräte nach dem Oberbegriff des Patentanspruches.

Es sind bereits Regeleinrichtungen für Elektro-Wärmespeicherheizgeräte nach dem Oberbegriff des Patentanspruches bekannt, bei denen neben Schaltkontakten für im Speicherkern angeordnete Heizwiderstände ein weiterer Schaltkontakt für eine Heizpatrone vorgesehen ist, die den Steuerfühler umgibt. Im Normalbetrieb öffnen die Schaltkontakte für die im Speicherkern angeordneten Heizwiderstände, wenn die Membran mit der maximalen Volumenausdehnung je eines Fühlers oder einer bestimmten Summenausdehnung aus beiden Fühlern beaufschlagt ist.

Die Membran ist jedoch nicht in der Lage, die maximale Volumenausdehnung aus beiden Fühlern aufzunehmen. Damit in einem derartigen Betriebszustand die Membrandose nicht überdehnt wird, schaltet der weitere Schaltkontakt die Steuerpatrone ab. Der weitere Schaltkontakt verursacht Funkstörungen, höhere Herstellkosten sowie einen größeren Bauumfang der Regeleinrichtung und ist Verschleiß unterworfen.

Aufgabe der Erfindung ist es, die Regeleinrichtung der im Oberbegriff des Patentanspruches genannten Art so auszubilden, daß sie ohne weiteren Schaltkontakt auskommt und dennoch die Sicherheit der Membrandose gegen Überdehnen gewährleistet ist.

Bec 25 Bes / 27.o6.1983

0132683

Die gestellte Aufgabe wird erfindungsgemäß durch die im kennzeichnenden Teil des Patentanspruches angegebene Ausbildung gelöst.

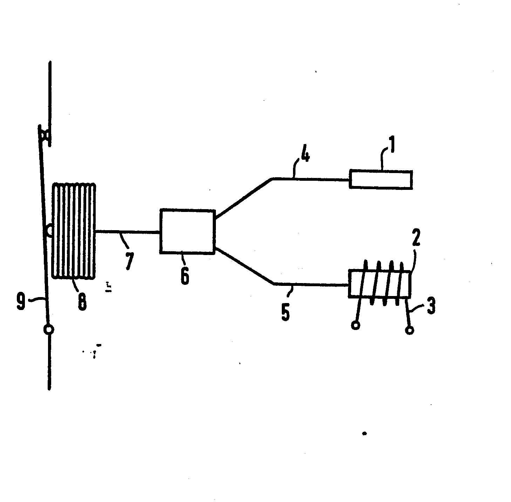

Ein Ausführungsbeispiel der Erfindung ist in der Zeichnung dargestellt, die ein Schaltschema zeigt.

Bei der in der Zeichnung dargestellten Regeleinrichtung für ein nicht dargestelltes Elektro-Wärmespeicherheizgerät ist mit 1 ein hydraulischer Kernfühler bezeichnet und mit 2 ein hydraulischer Steuerfühler.

Der Steuerfühler 2 ist von einer Heizpatrone 3 beaufschlagbar.

Die Fühler 1,2 sind jeweils durch ein Kapillarrohr 4, beziehungsweise 5 mit einer Kupplung 6 verbunden, die ihrerseits über ein Kapillarrohr 7 mit einer Membrandose 8 verbunden ist.

Die Membrandose 8 greift an einem Schaltkontakt 9 an, mit dem die im Speicherkern angeordneten Heizwiderstände abschaltbar sind.

Die sich bei entsprechenden Umgebungstemperaturen am Kernfühler 1 und am Steuerfühler 2 gegebenenfalls stark ausdehnende und auf die Membrandose 8 einwirkende Flüssigkeitssäule kann dann keine Überdehnung der Membrandose 8 hervorrufen, wenn ein bestimmtes Volumenverhältnis der Fühler 1,2 zur Membrandose 8 eingehalten wird.

Als Optimal für den Ausdehnungsschutz der Membrandose 8 hat sich erwiesen, wenn die zulässige Volumenausdehnung der Membrandose 8 größer ist als

0132683

- 3 -       VPA 83 P 6 6 0 3 E

die innerhalb der Anwendungsgrenztemperatur maximal mögliche Ausdehnung des in den Fühlern 1,2 und den Kapillarrohren 4,5,7 und der Kupplung 6 eingespannten Hydraulikmediums.

1 Patentanspruch
1 Figur

Patentanspruch

Regeleinrichtung für Elektro-Wärmespeicherheizgeräte, mit einem hydraulischen Kernfühler, einem von einem Heizwiderstand beeinflußbaren hydraulischen Steuerfühler, einer mit jedem der Fühler durch ein Kapillarrohr verbundenen Kupplung, einer mit der Kupplung durch ein Kapillarrohr verbundenen Membrandose und einem von der Membrandose beaufschlagbaren Schaltkontakt, d a d u r c h   g e - k e n n z e i c h n e t, daß die zulässige Volumenausdehnung der Membrandose (8) größer ist als die innerhalb der Anwendungsgrenztemperatur maximal mögliche Ausdehnung des in den Fühlern (1,2) und den Kapillarrohren (4,5,7) und der Kupplung (6) eingespannten Hydraulikmediums.

0132683

83 P 6603